# FASCICULE DE BREVET EUROPEEN

(11) **EP 3 353 133 B1**
(45) Date de publication et mention de la délivrance du brevet: **10.07.2019**
(21) Numéro de dépôt: 16778248.1
(22) Date de dépôt: 23.09.2016
(51) Int. Cl.: C04B 28/00, C04B 38/04, C04B 38/06, C04B 28/26

(54) **UTILISATION D'UN GEOPOLYMERE A POLYMERE SUPER-ABSORBANT**
VERWENDUNG EINES GEOPOLYMERS MIT SUPERABSORBIERENDEM POLYMER
USE OF A GEOPOLYMER WITH SUPERABSORBENT POLYMER

(30) Priorité: 25.09.2015 FR 1559078
(43) Date de publication de la demande: 01.08.2018
(73) Titulaire: Commissariat à l'Energie Atomique et aux Energies Alternatives, 75015 Paris (FR)
(72) Inventeur: POULESQUEN, Arnaud, 30133 Les Angles (FR); GERENTON, Adrien, 84000 Avignon (FR); FRIZON, Fabien, 30400 Villeneuve Les Avignon (FR); PIALLAT, Thomas, 84100 Orange (FR)
(74) Mandataire: Brevalex
(86) Numéro de dépôt international: PCT/EP2016/072630
(87) Numéro de publication internationale: WO 2017/050946

(56) Documents cités:
- EP-A1- 0 796 831
- EP-A1- 2 868 637
- WO-A1-2015/123732
- DE-A1-102014 003 103
- JP-A- H1 149 582

## Description

### DOMAINE TECHNIQUE

La présente invention appartient au domaine technique des géopolymères utilisés dans l'impression 3D.

Plus particulièrement, la présente invention utilise un matériau comprenant au moins un polymère super-absorbant enrobé dans une matrice géopolymère et ce, pour améliorer les propriétés notamment en termes de seuil d'écoulement, de module d'élasticité et de propriétés d'adhésion et ainsi améliorer la capacité d'un tel matériau géopolymère à être utilisé dans l'impression 3D.

La présente invention concerne également un procédé de préparation d'un matériau utilisé comme matériau pour l'impression 3D.

### ÉTAT DE LA TECHNIQUE ANTÉRIEURE

Les géopolymères sont des matériaux aluminosilicates synthétisés à partir de l'activation alcaline d'une source alumino-silicatée comme, par exemple, du métakaolin et des cendres volantes **[1].** Ce sont des matériaux principalement amorphes qui possèdent typiquement une porosité intrinsèque de l'ordre de 40-50% en volume par rapport au volume total de matériau, d'une taille moyenne de pores comprise entre 4 et 15 nm et d'une surface spécifique comprise entre 40 et 200 m²/g selon l'activateur alcalin utilisé (sodium ou potassium) **[2].**

Les géopolymères sont présentés comme ayant de bonnes résistances mécaniques, une bonne résistance au feu et aux attaques acides et peuvent être utilisés dans divers pans de l'industrie comme le bâtiment pour l'isolation thermique, le nucléaire pour le conditionnement de déchets **[3]** ou encore la chimie pour le piégeage d'éléments toxiques ou autres métaux lourds **[4].**

Récemment, les propriétés des géopolymères en ont également fait des matériaux idéaux pour l'impression 3D. En effet, dans ce domaine, la création d'objets ou de structures en géopolymère est une alternative largement supérieure aux plastiques puisqu'en un matériau exempt de carbone, comparable à de la pierre, à l'épreuve du feu et difficile à briser et donc d'une durabilité supérieure.

Toutefois, lorsque mis en oeuvre en impression 3D, les géopolymères peuvent présenter certains inconvénients. Par exemple, certains géopolymères, notamment ceux dont la source alumino-silicatée est du métakaolin, s'écoulent sous leur propre poids puisqu'ils ne possèdent pas de seuil d'écoulement. De plus, leur module élastique lié aux interactions locales entre particules est relativement faible. Ces deux caractéristiques sont préjudiciables dans l'impression 3D notamment lors de l'injection de la pâte de géopolymère aux travers des buses des imprimantes 3D et dans le maintien et la tenue de la forme imprimée.

Enfin, l'impression 3D peut nécessiter des propriétés d'adhésion renforcées entre la forme imprimée et la surface du support sur laquelle a lieu l'impression 3D, cette surface pouvant être hydrophobe.

Les inventeurs se sont donc fixé pour but de mettre au point un géopolymère apte à répondre à tout ou partie des contraintes liées à l'impression 3D.

En parallèle, les polymères super-absorbants (ou SAP pour « SuperAbsorbent Polymers ») sont des matériaux qui peuvent absorber une forte quantité d'eau ou de solutions aqueuses. Un gramme de ces polymères peut absorber et retenir jusqu'à 1000-1500 g d'eau. Les polymères super-absorbants ont été développés à la fin des années 1980 avec pour application les couches culottes. Les SAP sont des polyélectrolytes réticulés et les plus répandus dans l'industrie sont les polyacrylates de sodium. Lorsque les SAP sont plongés dans une solution aqueuse, ils gonflent par pression osmotique dont l'intensité est proportionnelle à la quantité d'ions présente dans la solution aqueuse. Le niveau de gonflement dépend également de la nature des ions puisque les ions divalents (Ca²⁺) ou trivalents (Al³⁺) agissent comme des réticulants additionnels réduisant ainsi la capacité d'adsorption et de gonflement [5].

L'utilisation de SAP dans l'industrie cimentaire n'est que très récente puisqu'elle a commencé au début des années 2000. Les ciments hydrauliques durcis sont le résultat de l'hydratation des matériaux finement broyés du mélange cimentaire. L'objectif principal de l'ajout de SAP dans un mélange cimentaire réside dans leurs capacités de provisionner de l'eau, ces polymères agissant alors comme un réservoir d'eau, pour contrôler, dans le temps, l'hydratation des particules de ciments et d'éviter l'auto-dessiccation et donc la fracturation.

L'amélioration de la durabilité des bétons est également un enjeu de l'ajout de SAP. En effet, puisque les propriétés de transport hydrique, qui sont à l'origine de la détérioration précoce des bétons, sont facilitées par la présence de pores capillaires interconnectés, le fait d'ajouter des SAP permet une redistribution de cette eau capillaire en macropores remplis d'eau, ce qui est également bénéfique pour la résistance des bétons au cycle de gel/dégel **[6, 7].**

EP 2868637 A1 décrit un matériau préparé à partir d'un mélange comprenant inter alia une source alumino-silicate, une activateur alkaline et un polymère super-absorbant.

WO2015/123732 décrit un procédé de l'impression 3D à partir d'un matériau geopolymère.

### EXPOSÉ DE L'INVENTION

La présente invention permet de remédier, au moins en partie, aux inconvénients et problèmes techniques liés à l'utilisation d'un géopolymère dans l'impression 3D. En effet, cette dernière propose d'utiliser, comme matériau pour l'impression 3D, un matériau composite dans lequel un ou plusieurs polymère(s) super-absorbant(s) est/sont dispersé(s), enrobé(s) et/ou incorporé(s) dans une matrice géopolymère.

Les travaux des inventeurs ont permis de montrer que géopolymères et polymères super-absorbants présentent une bonne compatibilité. Ces travaux ont aussi montré que l'adjonction d'au moins un polymère super-absorbant dans un géopolymère permet :
i) d'augmenter l'élasticité, le seuil d'écoulement et le caractère rhéofluidifiant du matériau composite obtenu et ce, pour donner un matériau injectable et notamment pour pouvoir l'injecter aux travers de buses d'imprimante 3D et afin que la forme demandée ne s'écroule pas ;
ii) de modifier et de contrôler les propriétés de mouillabilité du mélange en fonction de l'application visée pour le matériau composite ainsi obtenu, comme l'injection sous eau, barrière étanche à la lixiviation, stabilisation des sols...
iii) de moduler et notamment de diminuer le temps de prise du matériau composite ainsi obtenu ; et
iv) d'améliorer les propriétés d'adhésion du matériau composite ainsi obtenu.

Au vu des propriétés exposées ci-dessus, le matériau est particulièrement intéressant dans le domaine de l'impression 3D puisqu'il offre la possibilité de développer des produits à façon à base de géopolymère qui intrinsèquement possède de bonnes propriétés mécaniques, des surfaces spécifiques élevées ainsi qu'une distribution en taille de pores monomodale et mésoscopique. De tels produits présentent la propriété d'être injectables.

Cependant, de par les propriétés décrites et outre l'aspect impression 3D, la présente description envisage l'utilisation du matériau, comme enduit de rebouchage, à l'air libre ou immergé, comme joint ou encore comme béton projeté étant donné l'augmentation drastique des propriétés rhéologiques comme l'augmentation de l'élasticité, du seuil d'écoulement et du caractère rhéofluidifiant, ainsi que des propriétés d'adhésion.

Il convient de souligner que l'ajout de SAP dans les géopolymères n'avait jamais été étudié avant la présente invention et que l'utilisation de tels polymères dans le domaine des ciments hydrauliques notamment en tant que réservoir d'eau comme expliqué ci-dessus ne laissait en rien présager des avantages et des propriétés obtenus lors de l'utilisation de polymères superabsorbants dans des géopolymères.

Ainsi, la présente invention propose d'utiliser, comme matériau pour l'impression 3D, un matériau composite comprenant au moins un polymère super-absorbant dans une matrice géopolymère.

Par « matériau composite », on entend, dans le cadre de la présente invention, un assemblage d'une matrice géopolymère et d'un ou plusieurs polymère(s) super-absorbant(s). Cet assemblage peut se présenter sous forme d'une encapsulation de SAP par la matrice géopolymère, d'une micro-encapsulation de SAP par la matrice géopolymère et/ou d'un enrobage de SAP par la matrice géopolymère.

Plus particulièrement, le matériau composite mis en oeuvre dans l'invention se présente sous forme d'un géopolymère (ou matrice géopolymère) dans lequel (laquelle) des nodules de SAP et notamment des micronodules et/ou des nanonodules de SAP sont enrobés. Par « micronodule », on entend une masse de SAP dont la dimension caractéristique est comprise entre 1 et 1000 µm, notamment entre 5 et 900 µm et, en particulier entre 20 et 800 µm. Par « nanonodule », on entend une masse de SAP dont la dimension caractéristique est comprise entre 1 et 1000 nm, notamment entre 10 et 900 nm et, en particulier entre 20 et 800 nm. Les micronodules et les nanonodules de SAP présents dans le matériau composite mis en oeuvre dans l'invention peuvent présenter des formes variées telles que des formes ovales, sphéroïdes ou polyédriques. Ce sont ces nanonodules et micronodules qui participent, pour l'essentiel, au caractère macroporeux du géopolymère final obtenu après élimination des SAP donnant de fait des pores de formes variées telles que des formes ovales, sphéroïdes ou polyédriques.

Par « polymère super-absorbant » ou SAP, on entend généralement un polymère capable, à l'état sec, d'absorber spontanément au moins 10 fois, avantageusement au moins 20 fois son poids de liquide aqueux, en particulier d'eau et notamment d'eau distillée. Certains SAP peuvent absorber jusqu'à et même plus de 1000 fois ou encore plus de 1500 fois leur poids de liquide. Par absorption spontanée, on entend un temps d'absorption inférieur ou égal à 1h30 et notamment inférieur ou égal à 1h.

Le polymère super-absorbant mis en oeuvre dans la présente invention peut avoir une capacité d'absorption d'eau allant de 10 à 2000 fois son propre poids (soit 10 g à 2000 g d'eau absorbée par gramme de polymère absorbant), avantageusement de 20 à 2000 fois son propre poids (soit 20 g à 2000 g d'eau absorbée par gramme de polymère absorbant), en particulier encore de 30 à 1500 fois son propre poids (soit 30 g à 1500 g d'eau absorbée par gramme de polymère absorbant) et, plus particulièrement, de 50 à 1000 son propre poids (soit 50 g à 1000 g d'eau absorbée par gramme de polymère absorbant). Ces caractéristiques d'absorption d'eau s'entendent dans les conditions normales de température (25°C) et de pression (760 mm Hg soit 100000 Pa) et pour de l'eau distillée.

Le SAP du matériau composite mis en oeuvre dans l'invention peut être choisi parmi les poly(méth)acrylates de sels alcalins, les amidons greffés par un polymère (méth)acrylique, les amidons hydrolysés greffés par un polymère (méth)acrylique ; les polymères à base d'amidon, de gomme, et de dérivé cellulosique ; et leurs mélanges.

Plus précisément, le SAP utilisable dans le matériau composite mis en oeuvre dans l'invention peut être par exemple choisi parmi :
- les polymères résultants de la polymérisation avec réticulation partielle de monomères à insaturation éthylénique hydrosolubles, tels que les polymères acryliques, méthacryliques (issus notamment de la polymérisation de l'acide acrylique et/ou méthacrylique et/ou de monomères acrylates et/ou méthacrylates) ou vinyliques, en particulier les poly(méth)acrylates réticulés et neutralisés, notamment sous forme de gel ; et les sels notamment les sels alcalins tels que les sels de sodium ou de potassium de ces polymères ;
- les amidons greffés par des polyacrylates ;
- les copolymères acrylamide/acide acrylique, typiquement sous forme de sels, notamment de sels alcalins et en particulier de sels de sodium ou de potassium ;
- les amidons greffés acrylamide/acide acrylique, typiquement sous forme de sels, notamment de sels alcalins et en particulier de sels de sodium ou de potassium ;
- les sels, notamment les sels alcalins et en particulier les sels de sodium ou de potassium, de carboxyméthylcellulose ;
- les sels, notamment les sels alcalins et en particulier les sels de sodium ou de potassium, d'acides polyaspartiques réticulés ;
- les sels, notamment les sels alcalins et en particulier les sels de sodium ou de potassium, d'acides polyglutamiques réticulés et
- leurs mélanges.

En particulier, on peut utiliser comme SAP dans le matériau composite mis en oeuvre dans l'invention un composé choisi parmi :
- les polyacrylates de sodium ou de potassium réticulés vendus sous les dénominations SALSORB CL 10, SALSORB CL 20, FSA type 101, FSA type 102 (Allied Colloids) ; ARASORB S-310 (Arakawa Chemical) ; ASAP 2000, Aridall 1460 (Chemdal) ; Kl-GEL 201-K (Siber Hegner) ; AQUALIC CA W3, AQUALIC CA W7, AQUALIC CA W10; (Nippon Shokuba) ; AQUA KEEP D 50, AQUA KEEP D 60, AQUA KEEP D 65, AQUA KEEP S 30, AQUA KEEP S 35, AQUA KEEP S 45, AQUA KEEP Al M1, AQUA KEEP Al M3, AQUA KEEP HP 200, NORSOCRYL S 35, NORSOCRYL FX 007 (Arkema) ; AQUA KEEP 10SH-NF, AQUA KEEP J-550 (Kobo) ; LUQUASORB CF, LUQUASORB MA 1110, LUQUASORB MR 1600, HYSORB C3746-5 (BASF) ; COVAGEL (Sensient technologies) ; SANWET IM-5000D (Hoechst Celanese) ;
- les polyacrylates greffés d'amidon vendus sous les dénominations SANWET IM-100, SANWET IM-3900, SANWET IM-5000S (Hoechst) ;
- les copolymères acrylamide/acide acrylique greffés d'amidon sous forme de sel de sodium ou de potassium vendus sous les dénominations WATERLOCK A-100, WATERLOCK A-200, WATERLOCK C-200, WATERLOCK D-200, WATERLOCK B-204 (Grain Processing Corporation) ;
- les copolymères acrylamide/acide acrylique sous forme de sel de sodium vendus sous la dénomination WATERLOCK G-400 (Grain Processing Corporation) ;
- la carboxyméthylcellulose vendue sous la dénomination AQUASORB A250 (Aqualon) ;
- le polyglutamate de sodium réticulé vendu sous la dénomination GELPROTEIN (Idemitsu Technofine).

A noter que les polymères super-absorbants, en particulier les polymères super-absorbants (polyélectrolytes) qui contiennent des ions alcalins tels que des ions sodium ou potassium, par exemple de type poly(méth)acrylate de sodium ou de potassium, sont particulièrement adaptés à une utilisation dans un matériau composite mis en oeuvre dans l'invention. Ainsi, dans un mode de réalisation particulier, le polymère super-absorbant utilisé dans le cadre de la présente invention est un poly(méth)acrylate de sodium ou de potassium i.e. est choisi dans le groupe constitué par un polyacrylate de sodium, un polyacrylate de potassium, un polyméthacrylate de sodium et un polyméthacrylate de potassium.

Par « géopolymère » ou « matrice géopolymère », on entend dans le cadre de la présente invention un matériau solide et poreux à l'état sec, obtenu suite au durcissement d'un mélange contenant des matériaux finement broyés (i.e. la source alumino-silicatée) et une solution saline (i.e. la solution d'activation), ledit mélange étant capable de faire prise et de durcir au cours du temps. Ce mélange peut également être désigné sous les termes « mélange géopolymérique », « mélange géopolymère », « composition géopolymérique » ou encore « composition géopolymère ». Le durcissement du géopolymère est le résultat de la dissolution/polycondensation des matériaux finement broyés du mélange géopolymérique dans une solution saline telle qu'une solution saline de fort pH (i.e. la solution d'activation).

Plus particulièrement, un géopolymère ou matrice géopolymère est un polymère inorganique alumino-silicaté amorphe. Ledit polymère est obtenu à partir d'un matériau réactif contenant essentiellement de la silice et de l'aluminium (i.e. la source alumino-silicatée), activé par une solution fortement alcaline, le rapport massique solide/solution dans la formulation étant faible. La structure d'un géopolymère est composée d'un réseau Si-O-Al formé de tétraèdres de silicates (SiO₄) et d'aluminates (AlO₄) liés en leurs sommets par partage d'atomes d'oxygène. Au sein de ce réseau, se trouve(nt) un ou plusieurs cation(s) compensateur(s) de charge également appelé(s) cation(s) de compensation qui permet(tent) de compenser la charge négative du complexe AlO₄⁻. Ledit ou lesdits cation(s) de compensation est(sont) avantageusement choisi(s) dans le groupe constitué par les métaux alcalins tels que le lithium (Li), le sodium (Na), le potassium (K), le rubidium (Rb) et le césium (Cs) ; les métaux alcalino-terreux tels que le magnésium (Mg), le calcium (Ca), le strontium (Sr) et le barium (Ba) ; et leurs mélanges.

Dans un mode de réalisation particulier, lorsque le polymère super-absorbant utilisé dans le cadre de la présente invention est un poly(méth)acrylate de sodium, le cation de compensation mis en oeuvre sera avantageusement du sodium. En variante, lorsque le polymère super-absorbant utilisé dans le cadre de la présente invention est un poly(méth)acrylate de potassium, le cation de compensation mis en oeuvre sera avantageusement du potassium.

Les expressions « matériau réactif contenant essentiellement de la silice et de l'aluminium » et « source alumino-silicatée » sont, dans la présente invention, similaires et utilisables de façon interchangeable.

Le matériau réactif contenant essentiellement de la silice et de l'aluminium utilisable pour préparer la matrice géopolymére mise en oeuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc... ; des minéraux d'alumino-silicates naturels calcinés tels que le métakaolin ; des verres synthétiques à base d'alumino-silicates purs ; du ciment alumineux ; de la ponce ; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse.

Les expressions « solution d'activation », « solution saline de fort pH » et « solution fortement alcaline » sont, dans la présente invention, similaires et utilisables de façon interchangeable.

Par « fortement alcaline » ou « de fort pH », on entend une solution dont le pH est supérieur à 9, notamment supérieur à 10, en particulier, supérieur à 11 et, plus particulièrement supérieur à 12. En d'autres termes, la solution d'activation présente une concentration en OH⁻ supérieure à 0,01 M, notamment supérieure à 0,1 M, en particulier supérieure à 1 M et, plus particulièrement, comprise entre 5 et 20 M.

La solution d'activation comprend le cation de compensation ou le mélange de cations de compensation sous forme d'une solution ionique ou d'un sel. Ainsi, la solution d'activation est notamment choisie parmi une solution aqueuse de silicate de sodium (Na₂SiO₃), de silicate de potassium (K₂SiO₂), d'hydroxyde de sodium (NaOH), d'hydroxyde de potassium (KOH), d'hydroxyde de calcium (Ca(OH)₂), d'hydroxyde de césium (CsOH) et leurs dérivés etc....

Dans le matériau mis en oeuvre dans la présente invention, le ou les polymère(s) super-absorbant(s) est/sont incorporé(s) dans la matrice géopolymère jusqu'à un taux d'incorporation de 10% en masse par rapport à la masse totale dudit matériau. Avantageusement, ce taux d'incorporation est compris entre 0,1 et 5% et, en particulier, entre 0,2 et 3% en masse par rapport à la masse totale dudit matériau.

Le matériau mis en oeuvre dans la présente invention peut se présenter sous diverses formes, de petite ou grande taille, en fonction de l'application recherchée et notamment des structures de forme prédéterminée dans le cadre de l'impression 3D. Ainsi, le matériau mis en oeuvre dans la présente invention peut être sous forme d'une poudre fine, d'une poudre grossière, de grains, de granules, de pastilles, de billes, de balles, de blocs, de tiges, de cylindres, de plaques, de structures ou des mélanges de ceux-ci. Ces diverses formes peuvent être obtenues notamment grâce à la plasticité, avant durcissement, de la matrice géopolymère du matériau mis en oeuvre dans la présente invention.

La présente invention concerne l'utilisation, comme matériau pour l'impression 3D, d'un matériau composite tel que précédemment défini, ce dernier étant préparé à partir d'une formulation, ou kit d'éléments comprenant :
- une source alumino-silicatée notamment telle que précédemment définie;
- une solution d'activation notamment telle que précédemment définie et
- au moins un polymère super-absorbant notamment tel que précédemment défini.

La présente invention concerne également l'utilisation, comme matériau pour l'impression 3D, d'un matériau composite tel que précédemment défini, ce dernier étant préparé par un procédé de préparation qui comprend une étape consistant à incorporer au moins un polymère super-absorbant dans un mélange géopolymère. En d'autres termes, le procédé de préparation mis en oeuvre dans la présente invention consiste à mélanger ensemble les différents éléments de la formulation telle que précédemment définie.

Dans une 1^{ère} forme de mise en oeuvre, le procédé de préparation mis en oeuvre dans la présente invention comprend les étapes suivantes :
a) préparer une solution d'activation comprenant au moins un polymère super-absorbant,
b) ajouter à la solution obtenue à l'étape (a) au moins une source alumino-silicatée,
c) soumettre le mélange obtenu à l'étape (b) à des conditions permettant le durcissement du géopolymère.

L'étape (a) du procédé mis en oeuvre dans la présente invention consiste à ajouter à une solution d'activation telle que précédemment définie, préalablement préparée au moins un polymère super-absorbant. La préparation préalable de la solution d'activation est une étape classique dans le domaine des géopolymères.

Comme précédemment expliqué, la solution d'activation peut éventuellement contenir un ou plusieurs composant(s) silicaté(s) notamment choisi(s) dans le groupe constitué par la silice, la silice colloïdale et la silice vitreuse. Lorsque la solution d'activation contient un ou plusieurs composant(s) silicaté(s), ce ou ces dernier(s) est(sont) présent(s) en une quantité comprise entre 100 mM et 10 M, notamment entre 500 mM et 8 M et, en particulier, entre 1 et 6 M dans la solution d'activation.

Le ou les polymère(s) super-absorbant(s) est/sont ajouté(s) à la solution d'activation en une fois ou en plusieurs fois. Une fois le ou les polymère(s) super-absorbant(s) ajouté(s) à la solution d'activation, la solution ou dispersion obtenue est mélangée en utilisant un malaxeur, un agitateur, un barreau magnétique, un bain à ultrasons ou un homogénéisateur. Le mélange/malaxage lors de la sous-étape (a) du procédé mis en oeuvre dans l'invention se fait à une vitesse relativement lente. Par « vitesse relativement lente », on entend, dans le cadre de la présente invention, une vitesse de rotation du rotor du malaxeur inférieure ou égale à 250 tr/min, notamment inférieure ou égale à 200 tr/min et, en particulier, supérieure ou égale à 20 tr/min. Avantageusement, cette agitation est réalisée en utilisant un barreau magnétique. Cette agitation est rapidement arrêtée du fait de la gélification de la solution d'activation. Ainsi, suite à l'étape (a) du procédé mis en oeuvre dans l'invention, est obtenue une solution d'activation comprenant au moins un polymère super-absorbant se présentant sous forme d'une solution gélifiée dans laquelle les nodules de polymère(s) super-absorbant(s) sont uniformément répartis ou dispersés.

L'étape (a) du procédé mis en oeuvre dans l'invention est effectuée à une température comprise entre 10°C et 40°C, avantageusement entre 15°C et 30°C et, plus particulièrement, à température ambiante (i.e. 23°C±5°C) pendant une durée inférieure à 30 min, notamment inférieure à 15 min, en particulier comprise entre 15 s et 10 min et, plus particulièrement, entre 30 s et 5 min.

L'étape (b) du procédé mis en oeuvre dans l'invention consiste à mettre en contact la solution d'activation comprenant au moins un polymère super-absorbant et la source alumino-silicatée telle que précédemment définie.

La source alumino-silicatée peut être versée en une ou en plusieurs fois sur la solution d'activation contenant au moins un polymère super-absorbant. Dans une forme de mise en oeuvre particulière de l'étape (b), la source alumino-silicatée peut être saupoudrée sur la solution d'activation contenant au moins un polymère super-absorbant.

Avantageusement, l'étape (b) du procédé mis en oeuvre dans l'invention est mise en oeuvre dans un malaxeur dans lequel la solution d'activation contenant au moins un polymère super-absorbant a été préalablement introduite. Tout malaxeur connu de l'homme du métier est utilisable dans le cadre de la présente invention. A titre d'exemples non limitatifs, on peut citer un mélangeur NAUTA®, un malaxeur HOBART® et un malaxeur HENSCHEL®.

L'étape (b) du procédé mis en oeuvre dans l'invention comprend donc un mélange ou malaxage de la solution d'activation comprenant au moins un polymère super-absorbant avec la source alumino-silicatée. Le mélange/malaxage lors de l'étape (b) du procédé mis en oeuvre dans l'invention se fait à une vitesse relativement soutenue. Par « vitesse relativement soutenue », on entend, dans le cadre de la présente invention, une vitesse supérieure à 250 tr/min, notamment supérieure ou égale à 350 tr/min.

L'étape (b) du procédé mis en oeuvre dans l'invention est effectuée à une température comprise entre 10°C et 40°C, avantageusement entre 15°C et 30°C et, plus particulièrement, à température ambiante (i.e. 23°C±5°C) pendant une durée supérieure à 1 min, notamment comprise entre 2 min et 30 min et, en particulier comprise entre 4 min et 15 min.

L'homme du métier saura déterminer la quantité de source alumino-silicatée à utiliser dans le cadre de la présente invention en fonction de ses connaissances dans le domaine de la géopolymérisation ainsi que de la nature du ou des polymère(s) super-absorbant(s) mis en oeuvre et de la quantité de polymère(s) super-absorbant(s) et de solution d'activation mise en oeuvre.

Avantageusement, dans le procédé mis en oeuvre dans la présente invention, le rapport massique solution activation/MK avec solution d'activation représentant la masse de solution d'activation contenant un ou des polymère(s) super-absorbant(s) (exprimée en g) et MK représentant la masse de source alumino-silicatée (exprimée en g) utilisé est avantageusement compris entre 0,6 et 2 et notamment entre 1 et 1,5. A titre d'exemple particulier, le rapport solution activation/MK est de l'ordre de 1,3 (i.e. 1,3 ± 0,1).

De plus, outre la source alumino-silicatée, du sable, un granulat et/ou des fines peu(ven)t être ajouté(es) à la solution d'activation lors de l'étape (b) du procédé mis en oeuvre dans l'invention.

Par « granulat », on entend un matériau granulaire, naturel, artificiel ou recyclé dont la dimension moyenne des grains est avantageusement comprise entre 10 et 125 mm.

Les fines également appelées « fillers » ou « fines d'addition » est un produit sec, finement divisé, issu de la taille, du sciage ou du travail de roches naturelles, de granulats tels que précédemment définis et des pierres ornementales. Avantageusement, les fines présentent une dimension moyenne des grains notamment comprise entre 5 et 200 µm.

Le sable, le granulat et/ou les fines est(sont) ajouté(es) pour mieux réguler la hausse de température lors de l'étape (b) du procédé mais également pour optimiser les propriétés physiques et mécaniques du matériau composite obtenu.

Le sable éventuellement ajouté lors de l'étape (b) peut être un sable calcaire ou un sable siliceux. Avantageusement, il s'agit d'un sable siliceux qui permet d'atteindre les meilleurs résultats en ce qui concerne l'optimisation des propriétés physiques et mécaniques du matériau composite obtenu. Par « sable siliceux », on entend, dans le cadre de la présente invention, un sable constitué à plus de 90%, notamment à plus de 95%, en particulier à plus de 98% et, plus particulièrement, à plus de 99% de silice (SiO₂). Le sable siliceux mis en oeuvre dans la présente invention présente avantageusement une dimension moyenne des grains notamment inférieure à 10 mm, notamment inférieure à 7 mm et, en particulier, inférieure à 4 mm. A titre d'exemple particulier, on peut utiliser un sable siliceux présentant une dimension moyenne des grains comprise entre 0,2 et 2 mm.

Lorsque du sable est ajouté en plus de la source alumino-silicatée à la solution d'activation, le rapport massique entre sable et source alumino-silicatée est compris 2/1 et 1/2, notamment entre 1,5/1 et 1/1,5 et, en particulier, entre 1,2/1 et 1/1,2.

L'étape (c) du procédé mis en oeuvre dans l'invention consiste à soumettre le mélange obtenu à l'étape (b) à des conditions permettant le durcissement du mélange géopolymère.

Toute technique connue de l'homme du métier pour faire durcir un mélange géopolymère dans lequel est/sont présent(s) du ou des polymère(s) super-absorbant(s) est utilisable lors de l'étape de durcissement du procédé.

Les conditions permettant le durcissement lors de l'étape (c) comprennent avantageusement une étape de cure éventuellement suivie d'une étape de séchage. L'étape de cure peut se faire à l'air libre, sous eau, dans des moules hermétiques divers, par humidification de l'atmosphère entourant le mélange géopolymère ou par application d'un enduit imperméable sur ledit mélange. Cette étape de cure peut être mise en oeuvre sous une température comprise entre 10 et 80°C, notamment entre 20 et 60°C et, en particulier, entre 30 et 40°C et peut durer entre 1 et 40 jours, voire plus longtemps. Il est évident que la durée de la cure dépend des conditions mises en oeuvre lors de cette dernière et l'homme du métier saura déterminer la durée la plus adaptée, une fois les conditions définies et éventuellement par des tests de routine.

Lorsque l'étape de durcissement comprend une étape de séchage, en plus de l'étape de cure, ce séchage peut se faire à une température comprise entre 30 et 90°C, notamment entre 40 et 80°C et, en particulier, entre 50 et 70°C et peut durer entre 6 h et 10 jours, notamment entre 12 h et 5 jours et, en particulier, entre 24 et 60 h.

De plus, préalablement au durcissement du mélange géopolymère dans lequel est présent au moins un polymère super-absorbant, ce dernier peut être placé dans des moules ou dans des conteneurs de façon à lui conférer une forme prédéterminée suite ou préalablement à ce durcissement.

De même, le mélange géopolymère dans lequel est présent au moins un polymère super-absorbant est tout à fait adapté, préalablement à son durcissement, à une injection aux travers des buses des imprimantes 3D ainsi qu'au maintien et à la tenue de la forme imprimée.

Dans une 2^{nde} forme de mise en oeuvre, le procédé mis en oeuvre dans la présente invention comprend les étapes suivantes :
a') ajouter à une solution d'activation au moins une source alumino-silicatée,
b') ajouter au mélange obtenu à l'étape (a') ledit au moins un polymère super-absorbant,
c') soumettre le mélange obtenu à l'étape (b') à des conditions permettant le durcissement du géopolymère.

L'étape (a') du procédé mis en oeuvre dans la présente invention consiste à préparer une solution d'activation telle que précédemment définie dans laquelle est ajoutée au moins une source alumino-silicatée telle que précédemment définie. Une telle sous-étape est classique dans le domaine des géopolymères.

Tout ce qui a été précédemment décrit quant à la solution d'activation lors de l'étape (a) s'applique également à la solution d'activation mise en oeuvre lors de l'étape (a').

De même, tout ce qui a été précédemment décrit pour l'étape (b) et notamment les conditions du mélange/malaxage, le type de malaxeur, la température, la quantité de source alumino-silicatée et le rapport massique solution d'activation/MK s'applique, *mutatis mutandis,* à l'étape (a'). A noter cependant que l'agitation lors de l'étape (a') peut présenter une durée supérieure à 2 min, notamment comprise entre 4 min et 1 h et, en particulier comprise entre 5 min et 30 min.

L'étape (b') du procédé consiste à introduire, dans le mélange (solution d'activation + source alumino-silicatée), au moins un polymère super-absorbant. Il est évident que cette étape doit être mise en oeuvre relativement rapidement après la préparation du mélange précité et ce, préalablement à un tout durcissement de ce mélange qui pourrait empêcher l'obtention d'un mélange homogène suite à l'étape (b').

Le ou les polymère(s) super-absorbant(s) est/sont ajouté(s) au mélange (solution d'activation + source alumino-silicatée) en une fois ou en plusieurs fois. Une fois le ou les polymère(s) super-absorbant(s) ajouté(s) au mélange (solution d'activation + source alumino-silicatée), la préparation obtenue est mélangée en utilisant un malaxeur, un agitateur, un barreau magnétique, un bain à ultrasons ou un homogénéisateur. Le mélange/malaxage lors de l'étape (b') du procédé mis en oeuvre dans l'invention se fait à une vitesse relativement soutenue telle que précédemment définie et ce, pour obtenir un mélange homogène suite à l'étape (b').

L'étape (b') du procédé mis en oeuvre dans l'invention est effectuée à une température comprise entre 10°C et 40°C, avantageusement entre 15°C et 30°C et, plus particulièrement, à température ambiante (i.e. 23°C±5°C) pendant une durée inférieure à 30 min, notamment inférieure à 15 min, en particulier comprise entre 15 s et 10 min et, plus particulièrement, entre 30 s et 5 min.

De plus, comme envisagé dans le cadre de la 1^{ère} forme de mise en oeuvre, du sable, un granulat et/ou des fines tel(les) que précédemment défini(es) peu(ven)t être utilisé(es) pour préparer le matériau composite mis en oeuvre dans l'invention. Le sable, le granulat et/ou les fines peu(ven)t être ajouté(es) lors de l'étape (a') ; suite à l'étape (a') et préalablement à l'étape (b') ; lors de l'étape (b') et/ou suite à l'étape (b') et préalablement à l'étape (c').

Enfin, tout ce qui a été décrit pour l'étape (c) s'applique également à l'étape (c').

La présente invention concerne donc l'utilisation d'un matériau composite tel que précédemment défini ou préparé par un procédé de préparation tel que précédemment défini comme matériau pour l'impression 3D.

De plus, comme précédemment expliqué et exemplifié dans la partie expérimentale ci-après, les propriétés conférées à un géopolymère, suite à l'adjonction d'un ou de plusieurs polymère(s) super-absorbant(s), permettent de décrire d'autres utilisations pour le matériau composite et notamment dans le domaine du bâtiment. Ainsi, la présente description propose l'utilisation d'un matériau composite tel que précédemment défini ou susceptible d'être préparé par un procédé de préparation tel que précédemment défini :
(i) comme enduit de rebouchage,
(ii) comme joint, compte tenu des propriétés d'adhésion améliorées par ajout d'un ou plusieurs polymère(s) super-absorbant(s) et/ou
(iii) comme béton projeté.

La présente description propose aussi un procédé de préparation d'un géopolymère macroporeux et mésoporeux comprenant les étapes consistant à :
1) préparer un matériau composite comprenant au moins un polymère super-absorbant dans une matrice géopolymère selon le procédé de préparation tel que précédemment défini puis
2) éliminer ledit au moins un polymère super-absorbant par un traitement choisi dans le groupe constitué par un traitement thermique, un traitement oxydatif, un traitement photo-dégradatif et une extraction via un fluide supercritique ou des ultrasons.

L'étape (2) du procédé consiste à éliminer le ou les polymère(s) super-absorbant(s) et libérer ainsi la porosité du matériau composite obtenu suite à l'étape (1). Différentes variantes sont envisagées quant à cette élimination.

La 1^{ère} de ces variantes consiste en un traitement thermique. Par « traitement thermique », on entend, dans le cadre de la présente invention, le fait de soumettre le matériau composite de l'étape (1) à une haute température i.e. une température supérieure à 200°C, notamment comprise entre 300°C et 1000°C et, en particulier comprise entre 400°C et 800°C.

Ce traitement thermique est avantageusement réalisé sous oxygène, sous air, sous gaz inerte tel que l'argon ou sous gaz neutre tel que de l'azote et avantageusement sous oxygène ou sous air. Cette étape de traitement thermique consiste en une calcination ou en une sublimation des composés organiques que sont les polymères super-absorbants mis en oeuvre.

Cette étape présente une durée comprise entre 15 min et 12 h et, notamment entre 1 h et 6 h. Il est possible à l'homme du métier de faire varier les conditions du traitement thermique et ce, en fonction du matériau composite obtenu en fin d'étape (1) en vue d'obtenir un géopolymère poreux exempt de tout composé organique.

La 2^{nde} des variantes envisagées pour éliminer le ou les polymère(s) super-absorbant(s) utilisé(s) consiste à oxyder ces éléments principalement en CO₂ et H₂O. Un tel traitement oxydatif est notamment soit un traitement par plasma, soit un traitement à l'ozone.

Le traitement par plasma consiste à exposer le matériau composite obtenu suite à l'étape (1) à un plasma. Pour rappel, le plasma est un gaz à l'état ionisé, classiquement considéré comme un quatrième état de la matière. On apporte l'énergie nécessaire à l'ionisation d'un gaz au moyen d'une onde électromagnétique (radio fréquence ou micro onde). Le plasma est composé de molécules neutres, d'ions, d'électrons, d'espèces radicalaires (chimiquement très actives) et d'espèces excitées qui vont réagir avec la surface des matériaux.

On distingue les plasmas dits « froids » et les plasmas dits « chauds » qui se distinguent les uns des autres vis-à-vis du taux d'ionisation des espèces contenues dans le plasma. Pour les plasmas dits « froids », le taux d'ionisation des espèces réactives est inférieur à 10⁻⁴ alors que pour les plasmas dits « chauds », il est supérieur à 10⁻⁴. Les termes « chauds » et « froids » viennent du fait que le plasma dit « chaud » est beaucoup plus énergétique que le plasma dit « froid ».

Le plasma est avantageusement généré par un mélange d'au moins deux gaz, le premier et le second gaz étant respectivement choisis dans le groupe constitué par les gaz inertes et le groupe constitué par l'air et l'oxygène. La durée du traitement par plasma est comprise entre 1 et 30 min, et notamment, entre 5 et 15 min.

Un traitement à l'ozone consiste à exposer le matériau composite obtenu suite à l'étape (1) à de l'ozone. Cette exposition peut impliquer soit la mise en contact de ce matériau composite avec un flux d'ozone, soit la disposition de ce dernier dans une atmosphère contenant de l'ozone.

L'ozone nécessaire peut être obtenue, à partir d'un gaz riche en oxygène tel que de l'air, de l'oxygène, de l'air enrichi en oxygène ou un gaz enrichi en oxygène, via un générateur d'ozone tel qu'un UVO-Cleaner Model 42-200 à lampe à vapeur de mercure basse pression (28 mW/cm², 254 nm). La durée du traitement à l'ozone peut être variable. A titre d'exemples non limitatifs, cette durée est avantageusement comprise entre 30 sec et 3 h, notamment entre 1 min et 1 h, en particulier, entre 5 min et 30 min et, plus particulièrement, de l'ordre de 10 min (10 min ± 3 min).

La 3^{ème} des variantes envisagées pour éliminer le ou les polymère(s) super-absorbant(s) utilisé(s) est un traitement photo-dégradatif. Ce dernier consiste en une dégradation des composés organiques contenus dans le matériau composite obtenu suite à l'étape (1) au moyen d'une exposition à un rayonnement lumineux et notamment à une lumière UV.

Avantageusement, la lumière UV mise en oeuvre présente une longueur d'onde comprise entre 10 nm et 400 nm, notamment entre 100 nm et 380 nm et, en particulier, entre 180 nm et 360 nm. Toute source UV est utilisable pour générer une telle lumière UV. A titre d'exemple, on peut citer une lampe UV, une lampe à mercure à basse pression, une lampe à mercure à moyenne pression, une lampe à mercure à haute pression, une lampe à mercure à très haute pression, une lampe à arc électrique, une lampe aux halogénures, une lampe au xénon, un laser, un laser excimère ArF, un laser excimère KrF, une lampe excimère ou un rayonnement synchrotron.

Le traitement aux UV dans le cadre de la présente invention peut être réalisé à une température comprise entre 5°C et 120°C, notamment entre 10°C et 80°C et, en particulier, entre 15°C et 40°C. Plus particulièrement, le traitement aux UV selon l'invention est réalisé à température ambiante. Le traitement aux UV dans le cadre de la présente invention dure de 1 min à 5 h, notamment de 5 min à 1 h et, en particulier, de 10 min à 45 min. L'irradiation peut être unique ou être répétée plusieurs fois, notamment de 2 à 20 fois et en particulier, de 3 à 10 fois.

Ce traitement aux UV est avantageusement effectué sous gaz et notamment en présence d'un gaz riche en oxygène et/ou en ozone tel que de l'air, de l'oxygène, de l'ozone, de l'air enrichi en oxygène et/ou en ozone ou un gaz enrichi en oxygène et/ou en ozone.

La dernière de ces variantes consiste en une extraction des composés organiques que sont les polymères super-absorbants mis en oeuvre par un fluide supercritique ou des ultrasons.

Dans ce qui précède et ce qui suit, l'expression « fluide supercritique » est utilisée dans son acceptation habituelle, à savoir qu'un « fluide supercritique » est un fluide chauffé à une température supérieure à sa température critique (température maximale en phase liquide, quelle que soit la pression ou température du point critique) et soumis à une pression supérieure à sa pression critique (pression du point critique), les propriétés physiques d'un tel fluide supercritique (densité, viscosité, diffusivité) étant intermédiaires entre celles des liquides et celles des gaz. L'étape (2) du procédé met à profit les propriétés remarquables de solubilité des composés organiques que présentent les fluides supercritiques.

Tout fluide supercritique connu de l'homme du métier et généralement utilisé dans les procédés d'extraction ou de solubilisation des matières organiques est utilisable dans le cadre de ce procédé. Avantageusement, le fluide supercritique utilisé dans le cadre de l'étape (2) du procédé est choisi dans le groupe constitué par le dioxyde de carbone (CO₂) supercritique, le monoxyde d'azote (N₂O) supercritique, le Fréon-22 supercritique, le Fréon-23 supercritique, le méthanol supercritique, l'hexane supercritique et l'eau supercritique. Plus particulièrement, le fluide supercritique utilisé dans le cadre de l'étape (2) du procédé est le CO₂ supercritique, sa température critique (31°C) et sa pression critique (74 bar) étant relativement faciles à atteindre.

Le traitement aux ultrasons peut être réalisé sur le matériau composite obtenu suite à l'étape (1) placé avec un solvant adapté dans un bac à ultrasons ou avec une sonde à ultrasons et ce pendant une durée comprise entre 5 min et 24 h et notamment entre 10 min et 12 h. A titre d'exemples, on peut utiliser un bac à ultrasons ou une sonde à ultrasons libérant une puissance comprise entre 200 W et 750 W et fonctionnant à une fréquence comprise entre 10 et 45 kHz.

Cette étape d'extraction réalisée aussi bien avec un fluide supercritique qu'avec des ultrasons présente une durée comprise entre 15 min et 12 h et, notamment entre 1 h et 6 h. Il est possible à l'homme du métier de faire varier le traitement via un fluide supercritique et ce, en fonction du matériau composite obtenu en fin d'étape (1) en vue d'obtenir un géopolymère poreux exempt de tout composé organique.

Une fois l'étape (2) du procédé mise en oeuvre, un géopolymère mésoporeux et macroporeux i.e. un géopolymère présentant à la fois des macropores et des mésopores est obtenu. Par « macropores », on entend des pores ou vides présentant un diamètre moyen supérieur à 50 nm et notamment supérieur à 70 nm. Par « mésopores », on entend des pores ou vides présentant un diamètre moyen compris entre 2 et 50 nm et notamment entre 2 et 20 nm. Dans ce géopolymère, les macropores sont, pour l'essentiel, issus des nanonodules et/ou micronodules de polymères super-absorbants, alors que les mésopores résultent principalement du procédé de géopolymérisation. Ainsi, le géopolymère obtenu suite au procédé présente une porosité ouverte, une porosité ouverte pénétrante, une porosité connectée et une porosité fermée.

Il est intéressant de noter que la modulation de la quantité de polymères super-absorbants mis en oeuvre lors de l'étape (1) i.e. lors de la préparation du matériau composite permet d'influencer la taille des nodules de polymères super-absorbants et, par là même, la porosité finale dans le géopolymère obtenu suite à l'étape (2). La porosité finale dans le géopolymère peut donc être pré-déterminée dès l'étape (1) du procédé..

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

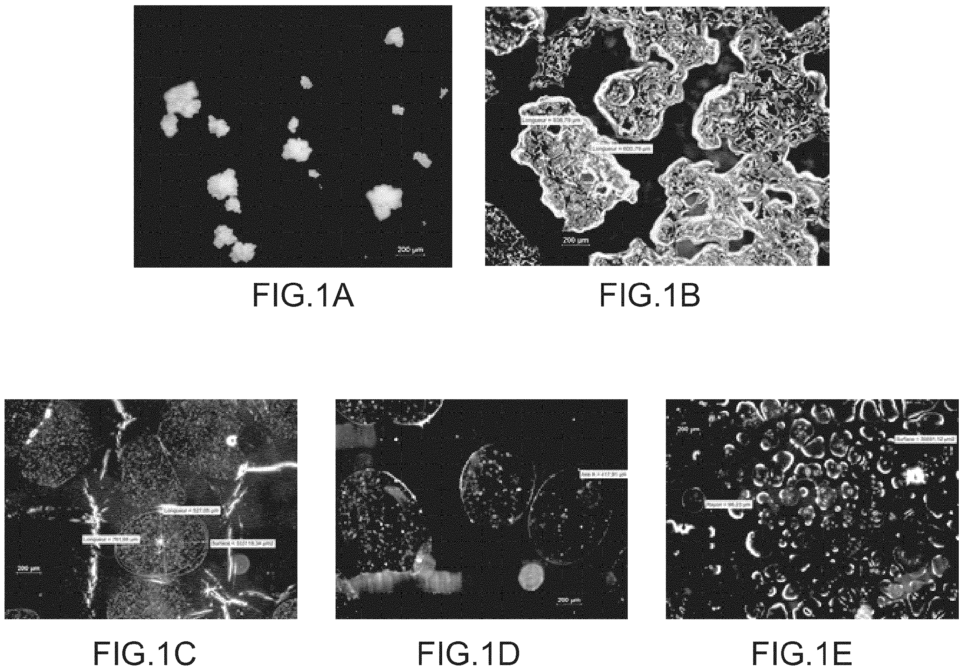

Les Figure 1A à 1E sont des photographies prises au microscope optique de polyacrylate de sodium (Aquakeep) dans différents environnements : à l'état sec (Figure 1A), 0,2% en masse d'Aquakeep dans de l'eau (Figure 1B), 0,2% en masse d'Aquakeep dans une solution d'activation (Figure 1C), 0,5% en masse d'Aquakeep dans une solution d'activation (Figure 1D) et 1% en masse d'Aquakeep dans une solution d'activation (Figure 1E).

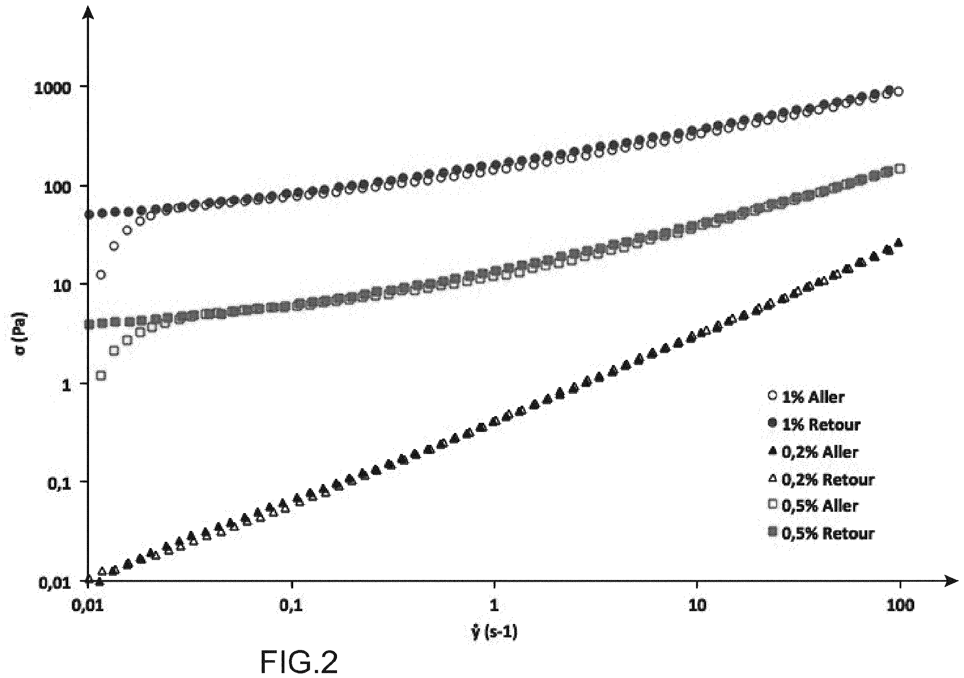

La Figure 2 présente l'influence de la concentration en Aquakeep sur la rhéologie de la solution d'activation.

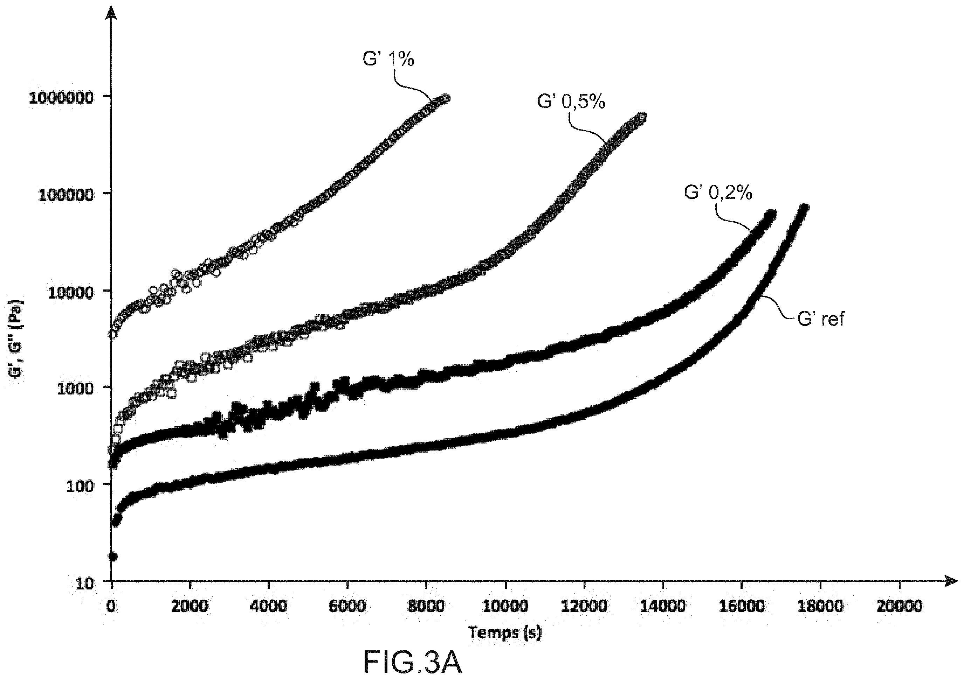

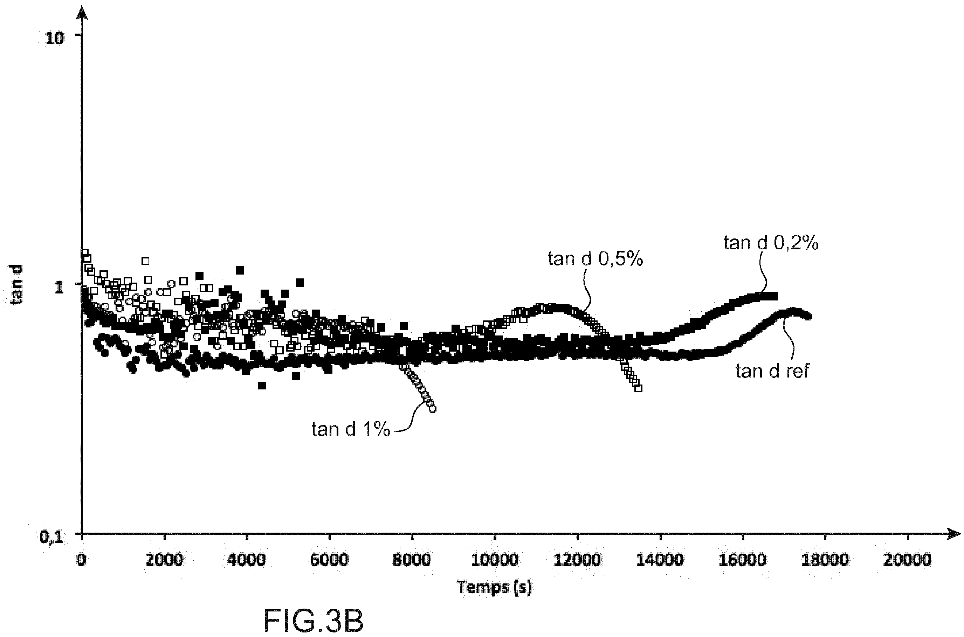

Les Figures 3A et 3B présentent respectivement l'influence de la concentration en Aquakeep sur l'élasticité et sur le temps de prise. Dans la Figure 3A, « G'ref » correspond à la mesure effectuée sur un géopolymère de référence sans Aquakeep et « G'0,2% », « G'0,5% » et « G'1% » correspondent respectivement aux mesures sur des géopolymères comprenant 0,2%, 0,5% et 1% en masse d'Aquakeep. Dans la Figure 3B, « tan d ref » correspond à la mesure effectuée sur un géopolymère de référence sans Aquakeep et « tan d 0,2% », « tan d 0,5% » et « tan d 1% » correspondent respectivement aux mesures sur des géopolymères comprenant 0,2%, 0,5% et 1% en masse d'Aquakeep.

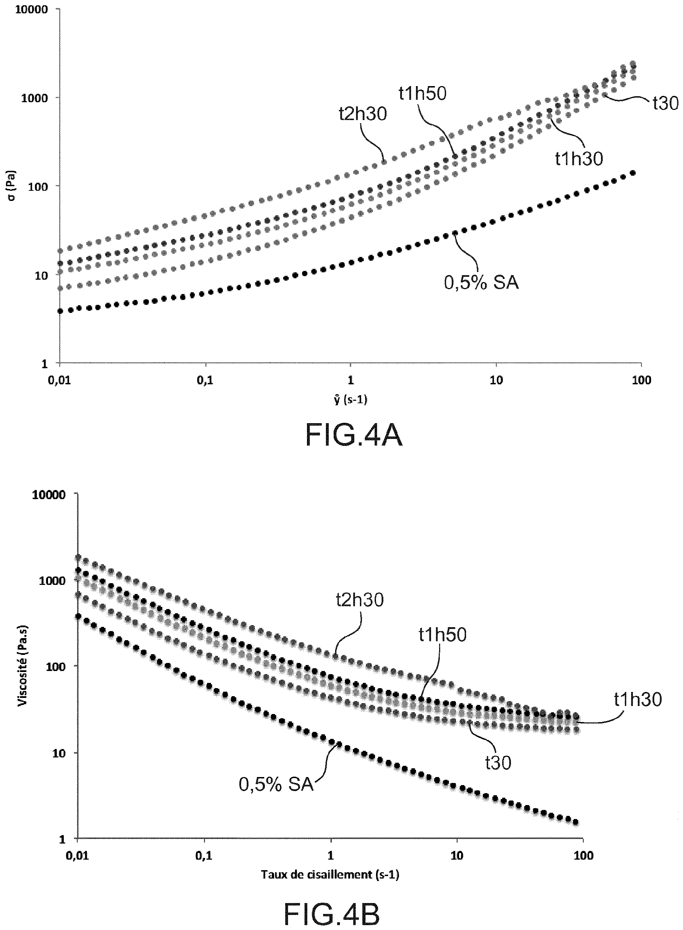

Les Figures 4A et 4B présentent respectivement l'influence du temps de géopolymérisation (30 min « t30 », 1h30 « t1h30 », 1h50 « tlh50 » et2h30 « t2h30 ») sur la contrainte en fonction du taux de cisaillement et sur la viscosité en fonction du taux de cisaillement, la légende 0,5% SA correspondant à une solution d'activation seule contenant 0,5% de polyacrylate de sodium.

### EXPOSÉ DÉTAILLÉ DE MODES DE RÉALISATION PARTICULIERS

### I. Matériaux utilisés et choix de formulation.

Dans l'ensemble des exemples suivants, la source alumino-silicatée utilisée est du métakaolin. Le métakaolin employé est du Pieri Premix MK (Grace Construction Products), dont la composition déterminée par fluorescence X est reportée dans le Tableau 1. La surface spécifique de ce matériau, mesurée par la méthode Brunauer-Emmet-Teller, est égale à 19,9 m²/g et le diamètre moyen des particules (d₅₀), déterminé par granulométrie laser, est égal à 5,9 µm.

**Tableau 1 : Composition chimique du métakaolin employé.**

| **% massique** | **SiO₂** | **Al₂O₃** | **CaO₃** | **Fe₂O₃** | **TiO₂** | **K₂O** | **Na₂O** | **MgO** | **P₂O₅** |
|---|---|---|---|---|---|---|---|---|---|
| **Métakaolin** | 54,40 | 38,40 | 0,10 | 1,27 | 1,60 | 0.62 | < 0,20 | < 0,20 | / |

Dans l'ensemble des exemples suivants, les cations compensateurs et agents de minéralisation retenus sont des hydroxydes d'alcalins, introduits sous forme de granules de NaOH (Prolabo, Rectapur, 98%).

Un silicate de sodium comme le Betol 39T (Woellner) est également mis en oeuvre dans l'ensemble des exemples suivants.

Enfin, le polymère superabsorbant mis en oeuvre dans l'ensemble des exemples suivants est un polyacrylate de sodium (PaaNa) commercialisé sous la marque Aquakeep 10SH-NF (SUMIMOTO SEIKA). La Figure 1 présente une série de photographies prises au microscope optique d'Aquakeep dans différents environnements. A l'état sec, ce dernier se présente sous forme d'agglomérats de billes sphériques dont le diamètre moyen est de 25 µm (donnée du fournisseur) (Figure 1A). Lors de l'ajout de 0,2% d'Aquakeep dans de l'eau, il se gonfle par absorption d'eau (Figure 1B). Les Figures 1C, 1D et 1E présentent l'influence de la teneur en Aquakeep dans une solution d'activation de géopolymère (solution basique de silicates alcalins). Plus la concentration en Aquakeep est élevée, plus la taille des nodules diminue, certainement du fait d'une absorption de solution plus faible mais également d'une dépolymérisation du réseau réticulé.

La formulation de géopolymère mis en oeuvre la présente invention utilisée dans les exemples est donnée dans le Tableau 2 ci-après :

**Tableau 2 : Formulation de géopolymère employée.**

| | **Composition : masse (g)** | **Quantité d'Aquakeep (g)** |
|---|---|---|
| **Géo-SAP** | - Métakaolin = 60,02 | 0,279 -> 0,2% en masse |
| | - NaOH = 11,8 | 0,699 -> 0,5% en masse |
| | - Silicate alcalin = 58,61 | 1,397 -> 1% en masse |
| | - Eau = 9,32 | |

### II. Préparation et caractérisation du géopolymère mis en oeuvre dans la présente invention.

### II.1. Préparation de la solution d'activation contenant l'Aquakeep.

La solution de silicates alcalins est préparée à température ambiante puis l'Aquakeep est ajouté à cette solution d'activation sous agitation magnétique. Cette solution gélifie par gonflement des polymères réticulés dû à l'absorption d'une certaine quantité de solution saline, le degré de gélification augmentant avec la concentration en Aquakeep.

Les solutions d'activation contenant de l'Aquakeep ont été caractérisées rhéologiquement (Figure 2) et il est constaté que pour une concentration de 0.2% en Aquakeep, la solution se comporte comme un fluide newtonien alors que pour une concentration en Aquakeep de 0,5% ou de 1%, une solution gélifiée apparaît (G'>G") avec un seuil d'écoulement.

Pour une concentration en Aquakeep de 0,5%, le seuil est environ égal à 4 Pa et, pour une concentration en Aquakeep de 1%, le seuil est égal à 45 Pa environ. Ces courbes d'écoulement peuvent parfaitement être décrites par une loi de type Herschel-Bulkley.

### II.2. Ajout du métakaolin et caractérisation du géopolymère obtenu.

Lorsque la solution initiale (solution d'activation + Aquakeep) est prête, le métakaolin y est ajouté, à température ambiante, sous agitation relativement soutenue pendant une durée d'environ 10 min et les réactions de géopolymérisation prennent place. Le géopolymère se forme autour des grains de SAP et le matériau obtenu est mis à durcir.

### Module élastique et temps de prise

La Figure 3A présente l'évolution du module élastique (G') au cours du temps et en fonction de la teneur en Aquakeep. Lorsque la concentration augmente, l'élasticité augmente du fait des interactions entre les nodules de PaaNa et le temps de prise diminue (maximum sur Tan delta sur la Figure 3B) puisque l'on ajoute du sodium dans la solution et donc le rapport Si/Na diminue. L'élasticité augmente de plus de deux décades avec seulement un ajout de 1% en masse d'Aquakeep.

### Comportement rhéologique en écoulement

Le comportement rhéologique en écoulement a également été déterminé afin d'obtenir l'évolution du seuil d'écoulement et de la viscosité avec le taux de cisaillement.

La Figure 4A permet de déterminer le seuil d'écoulement (plateau qui se dessine à faible taux de cisaillement). Il passe ainsi de 4 Pa pour la solution d'activation à environ 15-20 Pa au bout de 2h30 de géopolymérisation. Il est à noter que le comportement rhéologique diffère un peu de celui de la solution d'activation.

Il semblerait que les temps de relaxation caractéristiques de la pâte de géopolymère avec de l'Aquakeep soient plus longs et que, par conséquent, le plateau de contrainte apparaisse à plus faible taux de cisaillement. Cette caractéristique se retrouve bien sur l'évolution de la viscosité où un plateau newtonien se dessine à fort taux de cisaillement (Figure 4B). Une autre caractéristique intéressante est le caractère rhéofluidifiant (diminution de la viscosité avec le taux de cisaillement) du mélange, ce qui est bénéfique pour les procédés d'injection.

### Propriétés d'adhésion

Concernant l'augmentation des propriétés d'adhésion, les observations à l'échelle du laboratoire permettent de rendre compte de cette augmentation.

En effet, le fait d'ajouter du polyacrylate de sodium (PaaNa) permet une meilleure affinité avec les pots en plastiques dans lesquels les mélanges sont réalisés.

### RÉFÉRENCES

[1] J.L. Provis, J.S.J Van Deventer, Woodhead, Cambridge, UK ; 2009
**[2]** P. Steins, A. Poulesquen, F. Frizon, O. Diat, J. Jestin, J. Causse, D. Lambertin, S. Rossignol, Journal of Applied Crystallography, 47, (2014), 316-324
[3] Q. Li, Z. Sun, D. Tao, Y. Xu, P. Li, H. Cui, J. Zhai, Journal of hasardous materials, 262 (2013), 325-331
**[4]** A. Fernandez-Jimenez, A. Palomo, D.E. Macphee, E.E. Lachowski, J. Am. Ceram. Soc, 88(5), 2005, 1122-1126
[5] R. Castellani, A. Poulesquen, F. Goettmann, P. MArchal, L. Choplin, Col and Surf A, 454, (2014), 89-95
[6] A. Assmann, Dissertation of Stuttgart University, 2013: http://elib.uni-stuttgart.de/opus/volltexte/2013/8441/pdf/Dissertation Alexander Assmann.pdf
**[7]** http://www.rilem.org/docs/2013142837_225-sap-unedited-version.pdf

## Revendications

1. Utilisation d'un matériau composite comprenant au moins un polymère super-absorbant dans une matrice géopolymère comme matériau pour l'impression 3D.

2. Utilisation selon la revendication 1, **caractérisée en ce que** ledit polymère super-absorbant est choisi dans le groupe constitué par :
- les polymères résultants de la polymérisation avec réticulation partielle de monomères à insaturation éthylénique hydrosolubles, tels que les polymères acryliques, méthacryliques ou vinyliques, en particulier les poly(méth)acrylates réticulés et neutralisés; et les sels notamment les sels alcalins tels que les sels de sodium ou de potassium de ces polymères ;
- les amidons greffés par des polyacrylates ;
- les copolymères acrylamide/acide acrylique, typiquement sous forme de sels, notamment de sels alcalins et en particulier de sels de sodium ou de potassium ;
- les amidons greffés acrylamide/acide acrylique, typiquement sous forme de sels, notamment de sels alcalins et en particulier de sels de sodium ou de potassium ;
- les sels, notamment les sels alcalins et en particulier les sels de sodium ou de potassium, de carboxyméthylcellulose ;
- les sels, notamment les sels alcalins et en particulier les sels de sodium ou de potassium, d'acides polyaspartiques réticulés ;
- les sels, notamment les sels alcalins et en particulier les sels de sodium ou de potassium, d'acides polyglutamiques réticulés et
- leurs mélanges.

3. Utilisation selon la revendication 1 ou 2, **caractérisée en ce que** ledit polymère super-absorbant est un poly(méth)acrylate de sodium ou de potassium.

4. Utilisation selon l'une quelconque des revendications 1 à 3, **caractérisée en ce que** ledit matériau composite est préparé à partir d'une formulation comprenant :
- une source alumino-silicatée ;
- une solution d'activation et
- au moins un polymère super-absorbant.

5. Utilisation selon l'une quelconque des revendications 1 à 4, **caractérisée en ce que** ledit matériau composite est préparé par un procédé de préparation consistant à mélanger ensemble les différents éléments de la formulation telle que définie dans la revendication 4.

6. Utilisation selon l'une quelconque des revendications 1 à 5, **caractérisée en ce que** ledit matériau composite est préparé par un procédé de préparation consistant à :
a) préparer une solution d'activation comprenant au moins un polymère super-absorbant,
b) ajouter à la solution obtenue à l'étape (a) au moins une source alumino-silicatée,
c) soumettre le mélange obtenu à l'étape (b) à des conditions permettant le durcissement du géopolymère.

7. Utilisation selon l'une quelconque des revendications 1 à 5, **caractérisée en ce que** ledit matériau composite est préparé par un procédé de préparation consistant à :
a') ajouter à une solution d'activation au moins une source alumino-silicatée,
b') ajouter au mélange obtenu à l'étape (a') ledit au moins un polymère super-absorbant,
c') soumettre le mélange obtenu à l'étape (b') à des conditions permettant le durcissement du géopolymère.

## Patentansprüche

1. Verwendung eines Verbundmaterials, enthaltend zumindest ein superabsorbierendes Polymer in einer Geopolymermatrix, als Material zum 3D-Druck.

2. Verwendung nach Anspruch 1, **dadurch gekennzeichnet, dass** das superabsorbierende Polymer ausgewählt ist aus der Gruppe umfassend:
- Polymere, die aus der Polymerisation unter teilweiser Vernetzung von wasserlöslichen, ethylenisch ungesättigten Monomeren resultieren, wie Acryl-, Methacryl- oder Vinylpolymere, insbesondere vernetzte und neutralisierte Poly(meth)acrylate; und Salze, insbesondere Alkalisalze, wie Natrium- oder Kaliumsalze dieser Polymere;
- mit Polyacrylaten gepfropfte Stärken;
- Acrylamid-/Acrylsäure-Copolymere, typischerweise in Form von Salzen, insbesondere von Alkalisalzen und insbesondere von Natrium- oder Kaliumsalzen;
- gepfropfte Arcylamid-/Acrylsäure-Stärken, typischerweise in Form von Salzen, insbesondere von Alkalisalzen und insbesondere von Natrium- oder Kaliumsalzen;
- Salze, insbesondere Alkalisalze und insbesondere Natrium- oder Kaliumsalze, von Carboxymethylcellulose;
- Salze, insbesondere Alkalisalze und insbesondere Natrium- oder Kaliumsalze, von vernetzten Polyasparaginsäuren;
- Salze, insbesondere Alkalisalze und insbesondere Natrium- oder Kaliumsalze, von vernetzten Polyglutaminsäuren und
- deren Gemische.

3. Verwendung nach Anspruch 1 oder 2, **dadurch gekennzeichnet, dass** das superabsorbierende Polymer ein Natrium- oder Kalium-Poly(meth)acrylat ist.

4. Verwendung nach einem der Ansprüche 1 bis 3, **dadurch gekennzeichnet, dass** das Verbundmaterial aus einer Formulierung hergestellt ist, umfassend:
- eine Aluminosilikatquelle;
- eine Aktivierungslösung und
- zumindest ein superabsorbierendes Polymer.

5. Verwendung nach einem der Ansprüche 1 bis 4, **dadurch gekennzeichnet, dass** das Verbundmaterial mit einem Herstellungsverfahren hergestellt ist, das darin besteht, die verschiedenen Elemente der Formulierung nach Anspruch 4 miteinander zu vermischen.

6. Verwendung nach einem der Ansprüche 1 bis 5, **dadurch gekennzeichnet, dass** das Verbundmaterial mit einem Herstellungsverfahren hergestellt ist, das darin besteht,
a) eine Aktivierungslösung mit zumindest einem superabsorbierenden Polymer herzustellen,
b) der in Schritt (a) erhaltenen Lösung zumindest eine Aluminosilikatquelle hinzuzufügen,
c) das in Schritt (b) erhaltene Gemisch Bedingungen auszusetzen, die das Härten des Geopolymers gestatten.

7. Verwendung nach einem der Ansprüche 1 bis 5, **dadurch gekennzeichnet, dass** das Verbundmaterial mit einem Herstellungsverfahren hergestellt ist, das darin besteht,
a') einer Aktivierungslösung zumindest eine Aluminosilikatquelle hinzuzufügen,
b') dem in Schritt (a') erhaltenen Gemisch das zumindest eine superabsorbierende Polymer hinzuzufügen,
c') das in Schritt (b') erhaltene Gemisch Bedingungen auszusetzen, die das Härten des Geopolymers gestatten.

## Claims

1. Use of a composite material including at least one superabsorbent polymer in a geopolymer matrix as a material for 3D printing.

2. Use according to claim 1, **characterised in that** said superabsorbent polymer is chosen in the group constituted by:
- polymers resulting from polymerisation with partial cross-linking of water-soluble ethylenic unsaturated monomers, such as acrylic, methacrylic or vinylic polymers, in particular, cross-linked and neutralised poly(meth)acrylates; and salts, in particular, alkaline salts such as sodium or potassium salts of these polymers;
- starches grafted by polyacrylates;
- acrylamide/acrylic acid copolymers, typically in salt-form, in particular, alkaline salts such as sodium or potassium salts;
- acrylamide/acrylic acid grafted starches, typically in salt-form, particularly alkaline salts, and in particular, sodium or potassium salts;
- salts, particularly alkaline salts, and in particular, sodium or potassium salts of, carboxymethylcellulose;
- salts, particularly alkaline salts, and in particular, sodium or potassium salts of, cross-linked polyaspartic acids;
- salts, particularly alkaline salts, and in particular, sodium or potassium salts of, cross-linked polyglumatic acids and
- their mixtures.

3. Use according to claim 1 or 2, **characterised in that** said superabsorbent polymer is a sodium or potassium poly(meth)acrylate.

4. Use according to anyone of the claims 1 to 3, **characterised in that** said composite material is prepared from a formulation including:
- an alumino-silicate source;
- an activation solution and
- at least one superabsorbent polymer.

5. Use according to any one of the claims 1 to 4, **characterised in that** said composite material is prepared by a preparation method consisting of mixing together the different formulation elements, such as defined in claim 4.

6. Use according to any one of the claims 1 to 5, **characterised in that** said composite material is prepared by a preparation method consisting of:
a) preparing an activation solution including at least one superabsorbent polymer,
b) adding at least one alumino-silicate source to the solution obtained in step (a),
c) subjecting the mixture obtained in step (b) to conditions enabling the hardening of the geopolymer.

7. Use according to any one of the claims 1 to 5, **characterised in that** said composite material is prepared by a preparation method consisting of:
a') adding at least one alumino-silicate source to an activation solution,
b') adding at least one superabsorbent polymer to the mixture obtained in step (a'),
c') subjecting the mixture obtained in step (b') to conditions enabling the hardening of the geopolymer.
